(19) Europäisches Patentamt / European Patent Office / Office européen des brevets

(11) **EP 4 700 860 A1**

(12) **EUROPEAN PATENT APPLICATION**
published in accordance with Art. 153(4) EPC

(43) Date of publication:
**25.02.2026 Bulletin 2026/09**

(21) Application number: 23936022.5

(22) Date of filing: **09.05.2023**

(51) International Patent Classification (IPC):
$H01M\ 4/36^{(2006.01)}$ $\quad H01M\ 4/485^{(2010.01)}$
$H01M\ 4/525^{(2010.01)}$ $\quad H01M\ 10/0525^{(2010.01)}$

(52) Cooperative Patent Classification (CPC):
Y02E 60/10

(86) International application number:
**PCT/CN2023/093014**

(87) International publication number:
**WO 2024/229694 (14.11.2024 Gazette 2024/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Ningde Amperex Technology Limited Ningde, Fujian 352100 (CN)**

(72) Inventors:
• **MO, Wenbin**
  **Ningde, Fujian 352100 (CN)**
• **YANG, Pengbo**
  **Ningde, Fujian 352100 (CN)**

(74) Representative: **Dehns Germany Partnerschaft mbB**
**Theresienstraße 6-8**
**80333 München (DE)**

(54) **POSITIVE ELECTRODE MATERIAL, ELECTROCHEMICAL DEVICE, AND ELECTRONIC DEVICE**

(57) This application provides a positive electrode material, an electrochemical device, and an electronic device. The positive electrode material includes a lithium cobalt composite oxide, where the lithium cobalt composite oxide includes a matrix and a coating layer located on a surface of the matrix, the coating layer includes a first region and a second region, the first region has a $P6_3mc$ crystal structure, the second region has an R-3m crystal structure, and both the first region and the second region contain element Na. The positive electrode material of this application can reduce interface impedance during lithium-ion intercalation and deintercalation, improving high-temperature storage performance and cycling performance of the electrochemical device under high voltage.

FIG. 1

## Description

### TECHNICAL FIELD

This application relates to the technical field of batteries, and specifically, to a positive electrode material, an electrochemical device, and an electronic device.

### BACKGROUND

With the widespread use of devices such as notebook computers, mobile phones, tablet computers, unmanned aerial vehicles, and electric vehicles, people have an increasingly high requirement for energy density of lithium-ion batteries in these devices. To meet the requirement for high energy density, the voltage platform of lithium-ion batteries continues to increase. However, the elevated voltage intensifies interface reactions between the positive electrode material and the electrolyte, which leads to phase transformation and deactivation on the surface of the positive electrode material, causing increased impedance and capacity loss. Additionally, the electrolyte is oxidized on the material surface, generating byproducts that further increase impedance, resulting in rapid capacity decay.

### SUMMARY

In view of the above-mentioned problems in the prior art, this application provides a positive electrode material, an electrochemical device, and an electronic device, so as to reduce impedance of the electrochemical device and improve high-temperature storage performance and cycling performance of the electrochemical device under high voltage.

A first aspect of this application provides a positive electrode material including a lithium cobalt composite oxide, where the lithium cobalt composite oxide includes a matrix and a coating layer located on a surface of the matrix, the coating layer includes a first region and a second region, the first region has a $P6_3mc$ crystal structure, the second region has an R-3m crystal structure, and both the first region and the second region contain element Na. In the positive electrode material provided in this application, the first region with the $P6_3mc$ crystal structure and the second region with the R-3m crystal structure in the coating layer are both doped with element Na. Element Na can be doped at lithium sites, thereby expanding lithium-ion channels and stabilizing the structure of the surface layer of the lithium cobalt composite oxide, reducing interface impedance during lithium-ion intercalation and deintercalation, and improving the cycling performance of an electrochemical device under high voltage. Additionally, the first region with the $P6_3mc$ crystal structure exhibits excellent structural stability under high voltage, which can further suppress phase transformation and deactivation of the surface layer of the positive electrode material and reduce interface side reactions between the positive electrode material and the electrolyte, thereby improving the high-temperature storage performance and cycling performance of the electrochemical device under high voltage.

In some embodiments, a molar ratio of element Na to element Co in the first region is denoted as K1, satisfying: $0.1\% \leq K1 \leq 2.0\%$. This can enhance the stability of the crystal structure of the first region, thereby improving the cycling performance of the electrochemical device under high voltage. Further, $0.2\% \leq K1 \leq 1.0\%$.

In some embodiments, a molar ratio of element Na to element Co in the second region is denoted as K2, satisfying: $0.01\% \leq K2 \leq 1.0\%$. This can enhance the stability of the crystal structure of the second region, thereby improving the cycling performance of the electrochemical device under high voltage. Further, $0.04\% \leq K2 \leq 0.5\%$.

In some embodiments, $1.1 \leq K1/K2 \leq 5$.

In some embodiments, both the first region and the second region are located on the surface of the matrix.

In some embodiments, the first region is dispersed in the second region in an island-like form.

In some embodiments, a thickness of the coating layer is 10 nm to 200 nm.

In some embodiments, a thickness of the first region is 10 nm to 200 nm.

In some embodiments, a thickness of the second region is 10 nm to 200 nm.

In some embodiments, a grain boundary exists between the first region and the second region, and an included angle between a transition metal layer of the first region and a transition metal layer of the second region at the grain boundary is greater than or equal to 150°. This can promote lithium-ion transmission between the first region and the second region, and reduce interface impedance during lithium-ion intercalation and deintercalation, and due to the high structural stability of the first region with the $P6_3mc$ crystal structure under high voltage, provide stable channels for lithium-ion intercalation and deintercalation, thereby improving the cycling performance of the electrochemical device under high voltage.

In some embodiments, the matrix further contains element Na, and a molar ratio of element Na to element Co in the matrix is denoted as K3, satisfying: $0.01\% \leq K3 \leq 0.2\%$. By doping element Na in the matrix, it can expand lithium-ion channels in the matrix of the lithium cobalt composite oxide and stabilize its layered structure, and reduce impedance and stress concentration during lithium-ion intercalation and deintercalation, thereby improving the power performance of the electrochemical device, as well as its high-temperature storage performance and cycling performance under high voltage.

In some embodiments, the second region further contains element Al, and a molar ratio of element Al to element Co in the second region is denoted as B, satisfying: $0.1\% \leq B \leq 1\%$. The second region is further doped with element Al, which can further enhance the structural stability of the second region with the R-3m crystal structure under high voltage, improving the high-temperature storage performance and cycling performance of the electrochemical device under high voltage.

In some embodiments, the matrix further contains element Q, where the element Q includes at least one of Al, Mg, Ti, Ca, La, Y, Zr, Fe, Mn, Ni, Nb, Mo, W, Ta, Zn, Cr, Sn, V, Ce, Sr, Ge, Ga, Pb, Ba, or Cu, and a molar ratio of element Q to element Co in the matrix is denoted as C, satisfying: $0.1\% \leq C \leq 10\%$. By doping element Q in the matrix, it can further enhance the structural stability of the matrix under high voltage, improving the high-temperature storage performance and cycling performance of the electrochemical device under high voltage.

In some embodiments, based on a molar amount of metal elements excluding element Li in the lithium cobalt composite oxide, a molar percentage of element Co in the lithium cobalt composite oxide is 90% to 99%.

In some embodiments, the coating layer further includes a third region, where the third region includes an oxide of element M, the element M includes at least one of Al, Mg, Ti, Zr, Y, Nb, Ca, Ni, Mn, or Ce, and at least one of the following conditions are satisfied: (1) the third region is located on a surface of the second region facing away from the matrix; (2) the third region is located on a surface of the first region facing away from the matrix; or (3) the third region is located on a surface of the matrix. This can further enhance the protection for the lithium cobalt composite oxide, suppress phase transformation and deactivation of its surface layer, and reduce interface side reactions between the lithium cobalt composite oxide and the electrolyte, further improving the high-temperature storage performance and cycling performance of the electrochemical device under high voltage.

In some embodiments, the lithium cobalt composite oxide includes a first lithium cobalt composite oxide and a second lithium cobalt composite oxide, where an average particle size by volume $D_v50$ of the first lithium cobalt composite oxide is greater than an average particle size by volume $D_v50'$ of the second lithium cobalt composite oxide; based on a mass of the first lithium cobalt composite oxide, a mass percentage of element Na in the first lithium cobalt composite oxide is denoted as E; and based on a mass of the second lithium cobalt composite oxide, a mass percentage of element Na in the second lithium cobalt composite oxide is denoted as F, satisfying: $0.3 \leq E/F \leq 1.5$. This can reduce the kinetic difference between the large-particle-size first lithium cobalt composite oxide and the small-particle-size second lithium cobalt composite oxide, reduce the impedance of the electrochemical device, and improve the high-temperature storage performance and cycling performance of the electrochemical device under high voltage. Further, in some embodiments, $0.5 \leq E/F \leq 0.9$.

In some embodiments, $0.01\% \leq E \leq 0.3\%$.

In some embodiments, $0.04\% \leq F \leq 0.5\%$.

In some embodiments, the average particle size by volume $D_v50$ of the first lithium cobalt composite oxide is 12 $\mu m$ to 25 $\mu m$.

In some embodiments, the average particle size by volume $D_v50'$ of the second lithium cobalt composite oxide is 2 $\mu m$ to 8 $\mu m$.

In some embodiments, the average particle size by volume $D_v50$ of the first lithium cobalt composite oxide and the average particle size by volume $D_v50'$ of the second lithium cobalt composite oxide satisfy: $3 \leq D_v50/D_v50' \leq 6$. This can promote the filling of the small-particle-size second lithium cobalt composite oxide among particles of the large-particle-size first lithium cobalt composite oxide, increasing the energy density of the electrochemical device.

In some embodiments, a mass ratio of the first lithium cobalt composite oxide to the second lithium cobalt composite oxide is 70:30 to 95:5.

A second aspect of this application provides an electrochemical device including a positive electrode, where the positive electrode includes a positive electrode material layer, and the positive electrode material layer includes the foregoing positive electrode material. Thus, the electrochemical device of this application has low impedance, as well as excellent high-temperature storage performance and cycling performance under high voltage.

A third aspect of this application provides an electronic device including the foregoing electrochemical device.

## BRIEF DESCRIPTION OF DRAWINGS

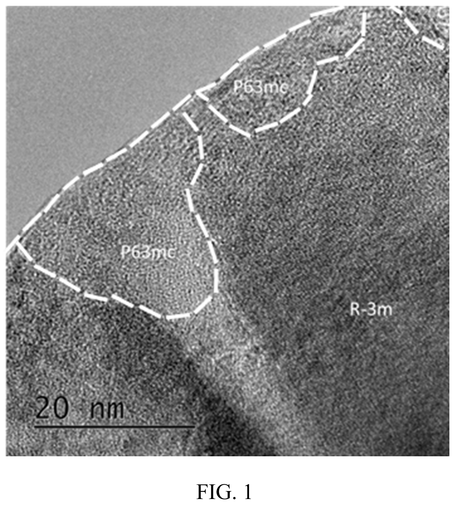

FIG. 1 is a transmission electron microscope image of a positive electrode material of Example 1 of this application.

## DESCRIPTION OF EMBODIMENTS

To make the objectives, technical solutions, and advantages of this application clearer, the technical solutions of this application will be described clearly and completely below in conjunction with embodiments. It is apparent that the described embodiments are part of the embodiments of this application, not all embodiments. The embodiments described herein are illustrative in nature and are used to provide a basic understanding of this application. Some embodiments of this application should not be construed as limitations on this application.

For brevity, this specification specifically discloses only some numerical ranges. However, any lower limit can be combined with any upper limit to form a range not explicitly stated; any lower limit can be combined with any other lower limit to form a range not explicitly stated; and any upper limit can be combined with any other upper limit to form a range not explicitly stated. Additionally, each individually disclosed point or single numerical value can itself serve as a lower limit or upper limit to combine with any other point or single numerical value or with other lower limits or upper limits to form a range not explicitly stated.

In the description herein, unless otherwise specified, "above" and "below" include the number itself. Unless otherwise specified, terms used in this application have the commonly understood meanings as known to those skilled in the art. Unless otherwise specified, the numerical values of parameters mentioned in this application can be measured using various measurement methods commonly used in the art (for example, testing can be performed according to the methods provided in the embodiments of this application).

A list of items connected by the terms "at least one of", "at least one kind of", or other similar terms may mean any combination of the listed items. For example, if items A and B are listed, the phrase "at least one of A or B" means only A, only B, or A and B. In another example, if items A, B, and C are listed, the phrase "at least one of A, B, or C" means only A, only B, only C, A and B (excluding C), A and C (excluding B), B and C (excluding A), or all of A, B, and C. Item A may contain a single component or multiple components. Item B may contain a single component or multiple components. Item C may contain a single component or multiple components.

I. Positive electrode material

An embodiment of this application provides a positive electrode material including a lithium cobalt composite oxide, where the lithium cobalt composite oxide includes a matrix and a coating layer located on a surface of the matrix, the coating layer includes a first region and a second region, the first region has a $P6_3mc$ crystal structure, the second region has an R-3m crystal structure, and both the first region and the second region contain element Na.

In the positive electrode material provided in this application, the first region with the $P6_3mc$ crystal structure and the second region with the R-3m crystal structure in the coating layer are both doped with element Na. The element Na can be doped at lithium sites, thereby expanding lithium-ion channels and stabilizing the structure of the surface layer of the lithium cobalt composite oxide, reducing interface impedance during lithium-ion intercalation and deintercalation, and improving the cycling performance of the electrochemical device under high voltage. Additionally, the first region with the $P6_3mc$ crystal structure exhibits excellent structural stability under high voltage, which can further suppress phase transformation and deactivation of the surface layer of the positive electrode material and reduce interface side reactions between the positive electrode material and the electrolyte, thereby improving the high-temperature storage performance and cycling performance of the electrochemical device under high voltage.

In some embodiments, a molar ratio of element Na to element Co in the first region is denoted as K1, satisfying: $0.1\% \leq K1 \leq 2.0\%$. For example, the molar ratio K1 of element Na to element Co in the first region is 0.1%, 0.2%, 0.4%, 0.5%, 0.6%, 0.8%, 1.0%, 1.2%, 1.5%, 1.8%, 2.0%, or a range defined by any two of the above values. It can be understood that the element Na may exist in the form of lithium-sodium-cobalt composite oxide. The molar content of element Na in the first region is controlled within the above range, which is beneficial to enhancing the stability of the crystal structure of the first region, improving the high-temperature storage performance and cycling performance of the electrochemical device under high voltage. Further, in some embodiments, $0.2\% \leq K1 \leq 1.0\%$.

In some embodiments, a molar ratio of element Na to element Co in the second region is denoted as K2, satisfying: $0.01\% \leq K2 \leq 1.0\%$. For example, the molar ratio K2 of element Na to element Co in the second region is 0.01%, 0.02%, 0.04%, 0.05%, 0.06%, 0.08%, 0.1%, 0.2%, 0.3%, 0.4%, 0.5%, 0.8%, 1.0%, or a range defined by any two of the above values. The molar content of element Na in the second region is controlled within the above range, which is beneficial to enhancing the stability of the crystal structure of the second region, improving the high-temperature storage performance and cycling performance of the electrochemical device under high voltage. This can also reduce the lithium capacity loss, thereby increasing the energy density of the electrochemical device. Further, in some embodiments, $0.04\% \leq K2 \leq 0.5\%$.

In some embodiments, the molar ratio K1 of element Na to element Co in the first region and the molar ratio K2 of element Na to element Co in the second region satisfy: $1.1 \leq K1/K2 \leq 5$. For example, K1/K2 is 1.1, 1.5, 2, 2.5, 3, 3.5, 4, 4.5, 5, or a range defined by any two of the above values. A relatively high local content of element Na in the coating layer facilitates local phase transformation to form the first region with the $P6_3mc$ crystal structure. Additionally, $K1/K2 \leq 5$ is beneficial to reducing differences in lithium-ion intercalation and deintercalation rates and structural stability between the first region and the second region, and lowering the risk of cracking between the first region and the second region caused by stress concentration during charging and discharging, thereby improving the high-temperature storage performance and cycling performance of the electrochemical device under high voltage.

In some embodiments, both the first region and the second region are located on the surface of the matrix.

In some embodiments, the first region is dispersed in the second region in an island-like form.

In some embodiments, a thickness of the coating layer is 10 nm to 200 nm. For example, the thickness of the coating layer is 10 nm, 20 nm, 40 nm, 50 nm, 60 nm, 80 nm, 100 nm, 120 nm, 150 nm, 180 nm, 200 nm, or a range defined by any two of the above values. Further, in some embodiments, the thickness of the coating layer is 50 nm to 150 nm.

Those skilled in the art can understand that the thicknesses of the first region and the second region in the coating layer may be the same or different. In some embodiments, a thickness of the first region is 10 nm to 200 nm. For example, the thickness of the first region is 10 nm, 20 nm, 40 nm, 50 nm, 60 nm, 80 nm, 100 nm, 120 nm, 150 nm, 180 nm, 200 nm, or a range defined by any two of the above values. Further, in some embodiments, the thickness of the first region is 10 nm to 100 nm. In some embodiments, a thickness of the second region is 10 nm to 200 nm. For example, the thickness of the second region is 10 nm, 20 nm, 40 nm, 50 nm, 60 nm, 80 nm, 100 nm, 120 nm, 150 nm, 180 nm, 200 nm, or a range defined by any two of the above values. Further, in some embodiments, the thickness of the second region is 50 nm to 150 nm.

In some embodiments, a grain boundary exists between the first region and the second region, and an included angle between a transition metal layer of the first region and a transition metal layer of the second region at the grain boundary is greater than or equal to 150°. For example, the included angle between the transition metal layer of the first region and the transition metal layer of the second region at the grain boundary is 150°, 155°, 160°, 165°, 170°, 175°, 178°, 180°, or a range defined by any two of the above values. Further, in some embodiments, the included angle between the transition metal layer of the first region and the transition metal layer of the second region at the grain boundary is greater than or equal to 160°. The included angle between the transition metal layer of the first region and the transition metal layer of the second region at the grain boundary is within the above range, which can promote lithium-ion transmission between the first region and the second region, reduce interface impedance during lithium-ion intercalation and deintercalation, and due to the high structural stability of the first region with the $P6_3mc$ crystal structure under high voltage, provide stable channels for lithium-ion intercalation and deintercalation, thereby improving the cycling performance of the electrochemical device under high voltage.

In some embodiments, the second region further contains element Al, and a molar ratio of element Al to element Co in the second region is denoted as B, satisfying: $0.1\% \leq B \leq 1\%$. For example, the molar ratio B of element Al to element Co in the second region is 0.1%, 0.2%, 0.4%, 0.5%, 0.6%, 0.8%, 0.9%, 1%, or a range defined by any two of the above values. The second region is further doped with element Al, which can further enhance the structural stability of the second region with the R-3m crystal structure under high voltage, improving the high-temperature storage performance and cycling performance of the electrochemical device under high voltage.

In some embodiments, the matrix further contains element Na, and a molar ratio of element Na to element Co in the matrix is denoted as K3, satisfying: $0.01\% \leq K3 \leq 0.2\%$. For example, the molar ratio K3 of element Na to element Co in the matrix is 0.01%, 0.02%, 0.04%, 0.05%, 0.06%, 0.08%, 0.1%, 0.12%, 0.15%, 0.18%, 0.2%, or a range defined by any two of the above values. By doping element Na in the matrix, it can expand lithium-ion channels in the matrix of the lithium cobalt composite oxide and stabilize its layered structure, and reduce impedance and stress concentration during lithium-ion intercalation and deintercalation, thereby improving the power performance of the electrochemical device, as well as its high-temperature storage performance and cycling performance under high voltage.

In some embodiments, the matrix further contains element Q, where the element Q includes at least one of Al, Mg, Ti, Ca, La, Y, Zr, Fe, Mn, Ni, Nb, Mo, W, Ta, Zn, Cr, Sn, V, Ce, Sr, Ge, Ga, Pb, Ba, or Cu, and a molar ratio of element Q to element Co in the matrix is denoted as C, satisfying: $0.1\% \leq C \leq 10\%$. For example, the molar ratio C of element Q to element Co in the matrix is 0.1%, 0.2%, 0.4%, 0.5%, 0.6%, 0.8%, 0.9%, 1%, 2%, 4%, 5%, 6%, 8%, 10%, or a range defined by any two of the above values. By doping element Q in the matrix, it can further enhance the structural stability of the matrix under high voltage, improving the high-temperature storage performance and cycling performance of the electrochemical device under high voltage.

In some embodiments, based on a molar amount of metal elements excluding element Li in the lithium cobalt composite oxide, a molar percentage of element Co in the lithium cobalt composite oxide is 90% to 99%. For example, based on the molar amount of metal elements excluding element Li, the molar percentage of element Co in the lithium cobalt composite oxide is 90%, 91%, 92%, 93%, 94%, 95%, 96%, 97%, 98%, 99%, or a range defined by any two of the above values.

In some embodiments, the coating layer further includes a third region, where the third region includes an oxide of element M, and the element M includes at least one of Al, Mg, Ti, Zr, Y, Nb, Ca, Ni, Mn, or Ce. In some embodiments of this application, the third region is located on a surface of the second region facing away from the matrix. In some other embodiments of this application, the third region is located on a surface of the first region facing away from the matrix. In still some embodiments of this application, the third region is located on a surface of the matrix. It can be understood that the presence of the oxide of element M can further enhance the protection for the lithium cobalt composite oxide, suppress phase transformation and deactivation of its surface layer, and reduce interface side reactions between the lithium cobalt

composite oxide and the electrolyte, further improving the high-temperature storage performance and cycling performance of the electrochemical device under high voltage.

In some embodiments, the lithium cobalt composite oxide includes the first lithium cobalt composite oxide and the second lithium cobalt composite oxide of the foregoing embodiments, where an average particle size by volume $D_v50$ of the first lithium cobalt composite oxide is greater than an average particle size by volume $D_v50'$ of the second lithium cobalt composite oxide. Based on a mass of the first lithium cobalt composite oxide, a mass percentage of element Na in the first lithium cobalt composite oxide is denoted as E; and based on a mass of the second lithium cobalt composite oxide, a mass percentage of element Na in the second lithium cobalt composite oxide is denoted as F, satisfying: $0.3 \leq E/F \leq 1.5$. For example, the ratio E/F of the mass percentage of element Na in the first lithium cobalt composite oxide to the mass percentage of element Na in the second lithium cobalt composite oxide is 0.3, 0.4, 0.5, 0.6, 0.7, 0.8, 0.9, 1, 1.1, 1.2, 1.3, 1.4, 1.5, or a range defined by any two of the above values. This can reduce the kinetic difference between the large-particle-size first lithium cobalt composite oxide and the small-particle-size second lithium cobalt composite oxide, reduce the impedance of the electrochemical device, and improve the high-temperature storage performance and cycling performance of the electrochemical device under high voltage. The distinction between the first lithium cobalt composite oxide and the second lithium cobalt composite oxide can be made by sieving the positive electrode material with a 1500-mesh sieve, where the material retained on the sieve is the first lithium cobalt composite oxide, and the material passing through the sieve is the second lithium cobalt composite oxide.

In some embodiments, $0.5 \leq E/F \leq 0.9$.

In some embodiments, $0.01\% \leq E \leq 0.3\%$. For example, the mass percentage E of element Na in the first lithium cobalt composite oxide is 0.01%, 0.02%, 0.03%, 0.05%, 0.06%, 0.08%, 0.10%, 0.12%, 0.14%, 0.16%, 0.18%, 0.20%, 0.22%, 0.24%, 0.26%, 0.28%, 0.30%, or a range defined by any two of the above values.

In some embodiments, $0.04\% \leq F \leq 0.5\%$. For example, the mass percentage F of element Na in the second lithium cobalt composite oxide is 0.04%, 0.05%, 0.06%, 0.08%, 0.10%, 0.12%, 0.15%, 0.16%, 0.18%, 0.20%, 0.22%, 0.24%, 0.26%, 0.28%, 0.30%, 0.35%, 0.40%, 0.45%, 0.50%, or a range defined by any two of the above values.

In some embodiments, an average particle size by volume $D_v50$ of the first lithium cobalt composite oxide is 12 $\mu$m to 25 $\mu$m. For example, the average particle size by volume $D_v50$ of the first lithium cobalt composite oxide is 12 $\mu$m, 15 $\mu$m, 16 $\mu$m, 17 $\mu$m, 18 $\mu$m, 19 $\mu$m, 20 $\mu$m, 25 $\mu$m, or a range defined by any two of the above values.

In some embodiments, an average particle size by volume $D_v50'$ of the second lithium cobalt composite oxide is 2 $\mu$m to 8 $\mu$m. For example, the average particle size by volume $D_v50'$ of the second lithium cobalt composite oxide is 2 $\mu$m, 3 $\mu$m, 3.5 $\mu$m, 4 $\mu$m, 4.5 $\mu$m, 5 $\mu$m, 5.5 $\mu$m, 6 $\mu$m, 8 $\mu$m, or a range defined by any two of the above values.

In some embodiments, an average particle size by volume $D_v50$ of the first lithium cobalt composite oxide and an average particle size by volume $D_v50'$ of the second lithium cobalt composite oxide satisfy: $3 \leq D_v50/D_v50' \leq 6$. For example, the ratio of the average particle size by volume $D_v50$ of the first lithium cobalt composite oxide to the average particle size by volume $D_v50'$ of the second lithium cobalt composite oxide, $D_v50/D_v50'$, is 3, 3.5, 4, 4.5, 5, 5.5, 6, or a range defined by any two of the above values. This can promote the filling of the small-particle-size second lithium cobalt composite oxide among particles of the large-particle-size first lithium cobalt composite oxide, increasing the energy density of the electrochemical device.

In some embodiments, a mass ratio of the first lithium cobalt composite oxide to the second lithium cobalt composite oxide is 70:30 to 95:5. For example, the mass ratio of the first lithium cobalt composite oxide to the second lithium cobalt composite oxide is 70:30, 75:25, 80:20, 85:15, 90:10, 95:5, or a range defined by any two of the above values.

II. Preparation method of positive electrode material

This application further provides a preparation method of positive electrode material for preparing the positive electrode material in the foregoing embodiments, including: step 1: subjecting a mixture containing a lithium source, a cobalt source, and an optional element Q source to primary sintering to obtain a primary positive electrode material; and step 2: subjecting the primary positive electrode material, a sodium source, and an optional element M source to secondary sintering in an atmosphere with an oxygen volume fraction of more than 50% to obtain a final positive electrode material. By sintering the primary positive electrode material with the sodium source in an atmosphere with an oxygen volume fraction of more than 50%, it can promote local phase transformation in the element Na-enriched region on the surface of the primary positive electrode material to form the first region with the $P6_3mc$ crystal structure, thereby obtaining the positive electrode material of this application.

In some embodiments, the lithium source includes, but is not limited to, at least one of lithium carbonate, lithium hydroxide, or lithium fluoride.

In some embodiments, the cobalt source includes, but is not limited to, at least one of cobalt tetroxide or cobalt hydroxide.

In some embodiments, the element Q source includes, but is not limited to, an oxide of the element Q.

In some embodiments, the sodium source includes, but is not limited to, at least one of sodium carbonate, sodium chloride, sodium sulfate, sodium sulfite, sodium fluoride, sodium phosphate, sodium nitrate, or sodium acetate.

In some embodiments, the element M source includes, but is not limited to, an oxide of the element M.

In some embodiments, an atmosphere for the primary sintering is an air atmosphere or an oxygen atmosphere.

In some embodiments, a temperature T1 of the primary sintering is 800°C to 1200°C, and a time t1 of the primary sintering is 4 h to 20 h.

In some embodiments, a temperature T2 of the secondary sintering is 600°C to 950°C, and a time t2 of the secondary sintering is 4 h to 20 h.

III. Electrochemical device

A second aspect of this application provides an electrochemical device including a positive electrode, where the positive electrode includes a positive electrode active layer, and the positive electrode active layer includes the foregoing positive electrode material.

The electrochemical device provided in this application further includes a negative electrode, where the negative electrode includes a negative electrode current collector and a negative electrode active layer located on a surface of the negative electrode current collector. In some embodiments, the negative electrode active layer includes a negative electrode material and a binder, and optionally a conductive agent. In some embodiments, the negative electrode material may include a material capable of reversibly intercalating/deintercalating lithium ions, lithium metal, a lithium metal alloy, or a transition metal oxide. In some embodiments, the negative electrode material includes at least one of a carbon material or a silicon-based material, where the carbon material includes at least one of graphite, hard carbon, or soft carbon, and the silicon-based material includes at least one of silicon, a silicon-oxygen composite material, a silicon-carbon composite material, or a silicon alloy. In some embodiments, the binder includes at least one of styrene-butadiene rubber, polyacrylic acid, polyacrylate, acrylate polymer, polyamide, or styrene-acrylate copolymer. In some embodiments, the conductive agent includes at least one of conductive carbon black, acetylene black, Ketjen black, carbon nanotubes, or graphene. In some embodiments, the negative electrode current collector includes: copper foil, nickel foil, stainless steel foil, titanium foil, nickel foam, copper foam, a polymer substrate coated with conductive metal, or any combination thereof.

The electrochemical device of this application further includes an electrolyte, where the electrolyte includes a lithium salt and a non-aqueous solvent.

In some embodiments of this application, the lithium salt includes, but is not limited to, one or more of $LiPF_6$, $LiBF_4$, $LiPO_2F_2$, $LiN(SO_2CF_3)_2$, $LiN(SO_2F)_2$, $LiB(C_2O_4)_2$, or $LiBF_2(C_2O_4)$.

The non-aqueous solvent includes, but is not limited to, one or more of a carbonate compound or a carboxylate compound.

For example, the carbonate compound includes, but is not limited to, one or more of a chain carbonate compound or a cyclic carbonate compound. Specifically, the chain carbonate compound includes, but is not limited to, one or more of dimethyl carbonate (DMC), diethyl carbonate (DEC), dipropyl carbonate (DPC), methyl propyl carbonate (MPC), ethyl propyl carbonate (EPC), or methyl ethyl carbonate (MEC); and the cyclic carbonate compound includes, but is not limited to, one or more of ethylene carbonate (EC), propylene carbonate (PC), or butylene carbonate (BC).

Exemplarily, the carboxylate compound includes, but is not limited to, one or more of methyl formate, methyl acetate, ethyl acetate, n-propyl acetate, tert-butyl acetate, methyl propionate, ethyl propionate, propyl propionate, γ-butyrolactone, decanolide, valerolactone, or caprolactone.

According to some embodiments of this application, in the electrochemical device of this application, a separator is provided between the positive electrode and the negative electrode to prevent short circuits. The material and shape of the separator used in the embodiments of this application are not particularly limited and may be any technology disclosed in the prior art. In some embodiments, the separator includes a polymer, an inorganic material, or the like formed from a material stable to the electrolyte of this application. For example, the separator may include a substrate layer and a surface treatment layer. The substrate layer is a non-woven fabric, film, or composite film with a porous structure. The substrate layer is made of at least one of polyethylene, polypropylene, polyethylene terephthalate, or polyimide. Specifically, a polypropylene porous film, a polyethylene porous film, a polypropylene non-woven fabric, a polyethylene non-woven fabric, or a polypropylene-polyethylene-polypropylene porous composite film may be used. The surface treatment layer is provided on at least one surface of the substrate layer. The surface treatment layer may be a binder layer or a heat-resistant layer. The heat-resistant layer includes inorganic particles and a binder. The inorganic particles include at least one of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder includes at least one of polyvinylidene fluoride, vinylidene fluoride-hexafluoropropylene copolymer, polyamide, polyacrylonitrile, polyacrylate, polyacrylic acid, polyacrylate salt, polyvinylpyrrolidone, polyvinyl ether, polytetrafluoroethylene, or polyhexafluoropropylene. The binder layer contains a polymer, where a material of the polymer includes at least one of polyamide, polyacrylonitrile, acrylate polymer, polyacrylic acid, polyacrylate salt, polyvinylpyrrolidone, polyvinyl ether, polyvinylidene fluoride, or vinylidene fluoride-hexafluoropropylene copolymer.

According to some embodiments of this application, the electrochemical device of this application includes, but is not limited to, all types of primary batteries or secondary batteries. In some embodiments, the electrochemical device is a lithium secondary battery. In some embodiments, the lithium secondary battery includes, but is not limited to, a lithium metal secondary battery, a lithium-ion secondary battery, a lithium polymer secondary battery, or a lithium-ion polymer secondary battery.

IV. Electronic device

An embodiment of this application further provides an electronic device, where the electronic device includes the electrochemical device according to the foregoing embodiments.

In some embodiments, the electronic device of this application includes, but is not limited to, a mobile phone, a notebook computer, a tablet computer, an unmanned aerial vehicle, an electric vehicle, an electric bicycle, an electric tool, a Bluetooth headset, or the like.

The following further describes the positive electrode material of this application and a preparation method thereof in conjunction with specific examples and comparative examples.

**Examples and comparative examples**

1. Preparation of positive electrode

1.1 Preparation of positive electrode material

Example 1

240 g of lithium carbonate and 500 g of cobalt tetroxide were weighed and mixed, followed by primary sintering at 1050°C in an air atmosphere for 9 hours to obtain a primary positive electrode material. The obtained primary positive electrode material was mixed with 0.89 g of sodium carbonate, and the mixture was subjected to secondary sintering at 850°C in a 50 vol% oxygen atmosphere for 7 hours, followed by crushing and sieving to obtain a positive electrode material with a $D_v50$ of 15 $\mu$m. A surface layer of the positive electrode material includes a first region with a $P6_3mc$ crystal structure and a second region with an R-3m crystal structure. The first region is dispersed in the second region in an island-like form, as shown specifically in FIG. 1. Both the first region and the second region contain element Na, where a molar ratio K1 of element Na to element Co in the first region is 0.45%, and a molar ratio K2 of element Na to element Co in the second region is 0.22%.

Examples 2 and 3

The preparation method was the same as that of Example 1, except that the amount of sodium carbonate added was controlled to adjust the content of element Na in the first region and the second region of the surface layer of the positive electrode material, with the amounts of sodium carbonate added being 0.73 g and 1.12 g, respectively.

Example 4

240 g of lithium carbonate, 500 g of cobalt tetroxide, and 0.29 g of sodium carbonate were weighed and mixed, followed by sintering at 1050°C in an air atmosphere for 8 hours to obtain a primary positive electrode material. The obtained primary positive electrode material was mixed with 0.32 g of sodium carbonate, and the mixture was subjected to secondary sintering at 800°C in a 50 vol% oxygen atmosphere for 8 hours, followed by crushing and sieving to obtain a positive electrode material with a $D_v50$ of 15 $\mu$m.

Examples 5 to 12

The preparation method was the same as that of Example 4, except that the amount of sodium carbonate added was controlled to adjust the content of element Na in the first region and the second region of the surface layer of the positive electrode material. The amounts of sodium carbonate added in the primary sintering step were 0.05 g, 0.12 g, 0.19 g, 0.36 g, 0.42 g, 0.48 g, 0.50 g, and 0.44 g, respectively; and the amounts of sodium carbonate added in the secondary sintering step were 0.26 g, 0.32 g, 0.37 g, 0.42 g, 0.86 g, 0.89 g, 0.93 g, and 1.08 g, respectively.

Example 13

240 g of lithium carbonate, 500 g of cobalt tetroxide, and 0.29 g of sodium carbonate were weighed and mixed, followed by sintering at 900°C in an air atmosphere for 9 hours to obtain a primary positive electrode material. The obtained primary positive electrode material was mixed with 0.60 g of sodium carbonate, and the mixture was subjected to secondary sintering at 800°C in a 50 vol% oxygen atmosphere for 8 hours, followed by crushing and sieving to obtain a positive electrode material with a $D_v50$ of 5 $\mu$m.

Examples 14 to 16

The method was substantially the same as that of Example 2, except that aluminum oxide was further added in the secondary sintering step and the content of element Al in the second region of the surface layer of the positive electrode material was adjusted through the amount of aluminum oxide added, with the amounts of aluminum oxide added being 0.18 g, 0.37 g, and 0.55 g, respectively.

Examples 17 to 20

The method was substantially the same as that of Example 15, except that after the secondary sintering step, aluminum oxide was further added and sintered at 800°C for 8 hours and the coating amount of aluminum oxide in the surface layer of the positive electrode material was adjusted based on the amount of aluminum oxide added, with the amounts of aluminum oxide added being 2.14 g, 2.90 g, 3.82 g, and 5.04 g, respectively.

Example 21

The method was substantially the same as that of Example 19, except that after the secondary sintering step, 0.14 g of zirconium oxide and 3.82 g of aluminum oxide were further added and sintered at 800°C for 8 hours.

Example 22

The positive electrode material of Example 4 was used as a first positive electrode material. The positive electrode material of Example 13 was used as a second positive electrode material.
The obtained first positive electrode material and second positive electrode material were mixed at a mass ratio of 8:2 to obtain a positive electrode material.

Examples 23 to 26

The preparation method was substantially the same as that of Example 22, except that the $D_v50$ of the first positive electrode material and the $D_v50'$ of the second positive electrode material were adjusted by changing the average particle size by volume $D_v50$ of cobalt tetroxide.

Examples 27 to 30

The preparation method was substantially the same as that of Example 22, except that the positive electrode materials of Examples 5, 6, 8, and 9 were used as the first positive electrode material, respectively.

Comparative Example 1

240 g of lithium carbonate and 500 g of cobalt tetroxide were weighed and mixed, followed by sintering at 1060°C in an air atmosphere for 12 hours, cooling to 700°C, and sintering again at 700°C for 10 hours. Then crushing and sieving were performed to obtain a positive electrode material with a $D_v50$ of 15 $\mu$m.

Comparative Example 2

The preparation method was substantially the same as that of Comparative Example 1, except that 0.17 g of sodium carbonate was further added and mixed with lithium carbonate and cobalt tetroxide, followed by the same sintering steps to obtain a positive electrode material.

Comparative Example 3

240 g of lithium carbonate and 500 g of cobalt tetroxide were weighed and mixed, followed by sintering at 900°C in an air atmosphere for 9 hours, cooling to 800°C, and sintering again at 800°C for 8 hours. Then crushing and sieving were performed to obtain a positive electrode material with a $D_v50$ of 5 $\mu$m.

Comparative Example 4

The preparation method was substantially the same as that of Example 1, except that the secondary sintering was performed in an air atmosphere.

Comparative Example 5

The positive electrode material obtained in Comparative Example 1 was used as a first positive electrode material.
The positive electrode material obtained in Comparative Example 3 was used as a second positive electrode material.
The first positive electrode material and the second positive electrode material were mixed at a mass ratio of 9:1 to obtain a positive electrode material.

1.2 Preparation of positive electrode

The positive electrode material, acetylene black, and polyvinylidene fluoride (PVDF) were mixed at a weight ratio of 94:3:3, N-methylpyrrolidone (NMP) was added, and the mixture was thoroughly stirred to produce a uniform positive electrode slurry. The positive electrode slurry was applied on one side surface of an aluminum foil positive electrode current collector and dried at 85°C. The same steps were repeated on the other side surface of the aluminum foil to obtain a positive electrode plate coated with a positive electrode active layer on both sides. The positive electrode plate was then cold-pressed, cut, and welded with tabs to obtain a positive electrode.

2. Preparation of negative electrode

Artificial graphite, sodium carboxymethyl cellulose (CMC), and styrene-butadiene rubber (SBR) were mixed at a weight ratio of 96:2:2 in an appropriate amount of deionized water and thoroughly stirred to produce a uniform negative electrode slurry. The negative electrode slurry was applied to one side surface of a copper foil negative electrode current collector and dried at 85°C. The same steps were repeated on the other side surface of the copper foil to obtain a negative electrode plate coated with a negative electrode active layer on both sides. The negative electrode plate was then cold-pressed, cut, and welded with tabs to obtain a negative electrode.

3. Preparation of electrolyte

In a dry argon environment, $LiPF_6$ was added to a solvent mixture of propylene carbonate (PC), ethylene carbonate (EC), and diethyl carbonate (DEC) (at a weight ratio of 1:1:1) and mixed to uniformity. Based on the total weight of the electrolyte, 4% fluoroethylene carbonate, 2% 1,3-propane sultone, 3% adiponitrile, and 1% 1,3,6-hexanetricarbonitrile were added, with the mass percentage of $LiPF_6$ being 12.5%, to obtain an electrolyte.

4. Preparation of separator

A polyethylene porous polymer film with a thickness of 10 $\mu$m was used as a separator.

5. Preparation of lithium-ion battery

The positive electrode, separator, and negative electrode were stacked in order, wound, and placed into an aluminum-plastic film outer packaging, followed by electrolyte injection and packaging. After processes such as standing, formation, degassing, and trimming, a lithium-ion battery was obtained.

II. Testing methods

1. Testing method for element content and coating layer thickness

The positive electrode plate was transferred to a chamber of a scanning electron microscope (model: FEI Vion Plasma FIB) equipped with a focused ion beam to prepare a sample suitable for analysis by a transmission scanning electron microscope (STEM, model: FEI Titan3 G2 60-300). The sample surface was protected with Pt and processed with a Ga ion beam, keeping the sample thickness not exceeding 100 nm. The sample was cleaned in low-voltage mode to remove residual surface debris resulted from processing. The sample was observed under STEM, and the crystal structures of the first region and the second region of the surface layer of the positive electrode material were determined through electron diffraction analysis. At an appropriate magnification, electron microscope images containing lattice fringes of the first region and the second region were captured, and the included angle between the lattice fringe of the first region and the lattice fringe of the second region at the grain boundary was measured using image processing software. Also, the thicknesses of the first region and the second region were measured, with the larger of the two values taken as the thickness of the coating layer. At an appropriate magnification, X-ray energy dispersive spectroscopy (EDS) was used to collect data to obtain the element content in the first region, the second region of the surface layer, and the matrix of the positive electrode material. Data was collected from at least three different locations, and the average value was taken as the final result.

2. Testing method for average particle size by volume $D_v50$ of positive electrode material

0.5 g of the sample powder to be tested was added to water and ultrasonically dispersed to uniformity. The sample dispersion was added to the circulation pool of a laser particle size analyzer for testing to obtain the average particle size by volume $D_v50$ of the positive electrode material particles.

3. Testing method for content E and F of element Na in first positive electrode material and second positive electrode material

The positive electrode material sample was digested in aqua regia, and the content of element Na in the positive electrode material was measured using an inductively coupled plasma optical emission spectrometer (ICP-OES).

4. Testing method for EIS impedance

At 25°C, the lithium-ion battery was charged at a constant current of 0.5C to 3.85 V. After the voltage reached 3.85 V, the lithium-ion battery was charged at a constant voltage to a current of 0.025C and then left standing for 5 minutes. An EIS impedance tester was then used to perform electrochemical impedance spectroscopy (EIS) testing, with the frequency range for the EIS test set to 0.1 kHz to 10 kHz and the amplitude set to 5 mV. The Rct impedance value of the lithium-ion battery was obtained through the EIS test.

5. Testing method for high-temperature storage swelling rate

At 25°C, the lithium-ion battery was charged at a constant current of 0.5C to 4.50 V, and then charged at a constant voltage of 4.50 V to a current of 0.05C, bringing it to a fully charged state at 4.50 V. The thickness of the fully charged battery before storage was measured and recorded as D0. The fully charged lithium-ion battery was then placed in an 85°C oven for 24 hours of storage. After the lithium-ion battery was taken out, its thickness after storage was immediately measured and recorded as D1.

$$\text{High-temperature storage swelling rate} = (D1 - D0)/D0 \times 100\%.$$

6. Testing method for cycling capacity retention rate

At 25°C, the lithium-ion battery was constant-current charged at 0.5C to 4.50 V, and then constant-voltage charged to 0.025C. After left standing for 5 minutes, the lithium-ion battery was constant-current discharged at 0.5C to 3.0 V, and the discharge capacity at the first cycle was recorded. The same steps were repeated for 800 charge-discharge cycles of the lithium-ion battery, and the discharge capacity at the 800th cycle was recorded.

Cycling capacity retention rate = (discharge capacity at the 800th cycle/discharge capacity at the first cycle) $\times$ 100%.

**Table 1**

| | Na/Co molar ratio K1 in first region with $P6_3mc$ phase | Na/Co molar ratio K2 in second region with R-3m phase | K1/K2 | Included angle between transition metal layers of first region and second region (°) | Coating layer thickness (nm) | Na/Co molar ratio K3 in matrix | Rct (Ω) | High-temperature storage swelling rate | Cycling capacity retention rate |
|---|---|---|---|---|---|---|---|---|---|
| Comparative Example 1 | / | / | / | / | / | / | 0.87 | 54.30% | 31.40% |
| Comparative Example 2 | / | / | / | / | / | 0.05% | 0.68 | 51.20% | 33.50% |
| Comparative Example 3 | / | / | / | / | / | / | 0.75 | 61.90% | 26.60% |
| Comparative Example 4 | / | 0.38% | / | / | 92 | / | 0.73 | 50.10% | 35.70% |
| Example 1 | 0.45% | 0.22% | 2.1 | 168 | 89 | / | 0.63 | 39.00% | 48.50% |
| Example 2 | 0.43% | 0.12% | 3.6 | 171 | 83 | / | 0.62 | 38.90% | 49.40% |
| Example 3 | 0.48% | 0.37% | 1.3 | 170 | 95 | / | 0.61 | 38.60% | 51.30% |
| Example 4 | 0.24% | 0.22% | 1.1 | 174 | 67 | 0.09% | 0.57 | 38.00% | 52.30% |
| Example 5 | 0.20% | 0.04% | 5 | 166 | 65 | 0.02% | 0.56 | 36.20% | 56.10% |
| Example 6 | 0.24% | 0.09% | 2.7 | 168 | 69 | 0.04% | 0.44 | 32.00% | 60.80% |
| Example 7 | 0.28% | 0.14% | 2 | 169 | 79 | 0.06% | 0.46 | 32.40% | 59.90% |
| Example 8 | 0.32% | 0.27% | 1.2 | 168 | 75 | 0.11% | 0.43 | 33.20% | 59.90% |
| Example 9 | 0.65% | 0.32% | 2 | 172 | 108 | 0.13% | 0.57 | 35.10% | 59.20% |
| Example 10 | 0.67% | 0.36% | 1.9 | 170 | 112 | 0.15% | 0.53 | 37.60% | 58.90% |
| Example 11 | 0.70% | 0.38% | 1.8 | 172 | 123 | 0.15% | 0.53 | 36.50% | 58.00% |
| Example 12 | 0.82% | 0.33% | 2.5 | 169 | 145 | 0.13% | 0.55 | 37.50% | 58.00% |
| Example 13 | 0.37% | 0.24% | 1.5 | 165 | 81 | 0.09% | 0.6 | 37.30% | 57.00% |

Referring to Table 1, the comparison of Comparative Examples 1 and 2 with Example 1 shows that the positive electrode material of this application has the first region with the $P6_3mc$ crystal structure and the second region with the R-3m crystal structure in the surface layer, and both the first region and the second region contain element Na, effectively reducing the impedance and high-temperature storage swelling rate of the lithium-ion battery, and improving the cycling capacity retention rate of the lithium-ion battery under high voltage. For the positive electrode material of Comparative Example 2, due to the doping of element Na, the ionic conductivity of the positive electrode material is enhanced, which can reduce the impedance of the lithium-ion battery to some extent and improve the rate performance of the lithium-ion battery. However, the surface layer of the positive electrode material of Comparative Example 2 only has an R-3m phase doped with element Na, and the R-3m phase is structurally unstable under high voltage, making it impossible to effectively improve the high-temperature storage swelling rate and cycling capacity retention rate of the lithium-ion battery using the positive electrode material of Comparative Example 2 under high voltage. Compared to the positive electrode material of Comparative Example 2, the positive electrode material of this application has both the first region with the $P6_3mc$ phase and the second region with the R-3m phase in the surface layer, which not only makes the structure of the surface layer of the positive electrode material more stable but also further enhances the ionic conductivity of the positive electrode material, thereby significantly improving the power performance of the lithium-ion battery, as well as its high-temperature storage performance and cycling performance under high voltage.

Referring to Table 1, from Examples 1 to 13, it can be seen that since the first region with the P6$_3$mc crystal structure in the positive electrode material of this application is formed through in-situ phase transformation, and the included angle between the transition metal layer of the first region and the transition metal layer of the second region at the grain boundary is greater than or equal to 150°, lithium-ion transmission between the first region and the second region can be promoted, and interface impedance during lithium-ion intercalation and deintercalation can be reduced. Moreover, due to the high structural stability of the first region with the P6$_3$mc crystal structure under high voltage, stable channels can be provided for lithium-ion intercalation and deintercalation, thereby improving the cycling performance of the lithium-ion battery under high voltage.

In the positive electrode material of this application, the molar ratio K1 of element Na to element Co in the first region satisfies 0.1% ≤ K1 ≤ 1.0%, the molar ratio K2 of element Na to element Co in the second region satisfies 0.04% ≤ K2 ≤ 0.5%, and the relationship between K1 and K2 satisfies 1.1 ≤ K1/K2 ≤ 5, all of which are beneficial to improving the power performance of the lithium-ion battery, as well as its high-temperature storage performance and cycling performance under high voltage. Additionally, the comparison of Examples 1 to 3 with Examples 4 to 13 shows that further doping the matrix with element Na can further reduce the impedance of the lithium-ion battery and improve the high-temperature storage performance and cycling performance of the lithium-ion battery under high voltage. The reason is that doping the matrix with element Na can expand lithium-ion channels in the matrix of the lithium cobalt composite oxide and stabilize its layered structure, and reduce impedance and stress concentration during lithium-ion intercalation and deintercalation, thereby improving the power performance of the lithium-ion battery, as well as its high-temperature storage performance and cycling performance under high voltage.

**Table 2**

| | Na/Co molar ratio K1 in first region with P6$_3$mc phase | Al/Co molar ratio B in second region | Oxide of element M in third region of coating layer | Rct (Ω) | High-temperature storage swelling rate | Cycling capacity retention rate |
|---|---|---|---|---|---|---|
| Example 2 | 0.43% | / | / | 0.62 | 38.9% | 49.4% |
| Example 14 | 0.42% | 0.12% | / | 0.60 | 23.6% | 65.6% |
| Example 15 | 0.47% | 0.24% | / | 0.58 | 22.4% | 66.7% |
| Example 16 | 0.48% | 0.36% | / | 0.57 | 21.1% | 67.5% |
| Example 17 | 0.45% | 0.26% | Al$_2$O$_3$ | 0.60 | 20.8% | 69.5% |
| Example 18 | 0.46% | 0.27% | Al$_2$O$_3$ | 0.59 | 19.3% | 70.8% |
| Example 19 | 0.44% | 0.30% | Al$_2$O$_3$ | 0.61 | 17.6% | 72.8% |
| Example 20 | 0.41% | 0.32% | Al$_2$O$_3$ | 0.62 | 17.0% | 73.1% |
| Example 21 | 0.49% | 0.36% | Al$_2$O$_3$+ZrO$_2$ | 0.61 | 16.5% | 74.2% |

Referring to Table 2, the comparison of Example 2 with Examples 14 to 16 shows that the coating layer is further doped with element Al, and the molar ratio B of element Al to element Co in the second region satisfies 0.1% ≤ B ≤ 1%, which can further reduce the high-temperature storage swelling rate of the lithium-ion battery and increase its cycling capacity retention rate under high voltage, thereby further improving the safety performance and cycling performance of the lithium-ion battery.

Referring to Table 2, the comparison of Example 15 with Examples 17 to 20 shows that the surface of the positive electrode material is further coated with an oxide of element M, which can further reduce the high-temperature storage swelling rate of the lithium-ion battery and increase its cycling capacity retention rate under high voltage, thereby further improving the safety performance and cycling performance of the lithium-ion battery.

**Table 3**

| | $D_v50$ of first positive electrode material ($\mu$m) | $D_v50'$ of second positive electrode material ($\mu$m) | E | F | E/F | $D_v50/D_v50'$ | Rct ($\Omega$) | High-temperature storage swelling rate | Cycling capacity retention rate |
|---|---|---|---|---|---|---|---|---|---|
| Comparative Example 5 | 15 | 5 | / | / | / | 3 | 0.66 | 60.50% | 33.30% |
| Example 22 | 15 | 5 | 0.04% | 0.06% | 0.67 | 3 | 0.48 | 33.70% | 69.80% |
| Example 23 | 20 | 4 | 0.04% | 0.06% | 0.67 | 5 | 0.49 | 32.40% | 68.90% |
| Example 24 | 18 | 3 | 0.04% | 0.06% | 0.67 | 6 | 0.44 | 34.20% | 68.60% |
| Example 25 | 18 | 5 | 0.04% | 0.06% | 0.67 | 3.6 | 0.48 | 33.10% | 67.00% |
| Example 26 | 18 | 6 | 0.04% | 0.06% | 0.67 | 3 | 0.44 | 33.30% | 71.70% |
| Example 27 | 15 | 5 | 0.02% | 0.06% | 0.33 | 3 | 0.52 | 35.90% | 62.30% |
| Example 28 | 15 | 5 | 0.03% | 0.06% | 0.5 | 3 | 0.36 | 30.20% | 70.10% |
| Example 29 | 15 | 5 | 0.05% | 0.06% | 0.83 | 3 | 0.35 | 31.50% | 71.70% |
| Example 30 | 15 | 5 | 0.09% | 0.06% | 1.5 | 3 | 0.51 | 35.10% | 64.50% |

Referring to Table 1 and Table 3, the comparison of Examples 4 to 13 with Examples 22 to 30 shows that the positive electrode materials of this application are prepared by mixing particles of different sizes, and the $D_v50$ of the first positive electrode material and the $D_v50'$ of the second positive electrode material satisfy $3 \leq D_v50/D_v50' \leq 6$, which can further reduce the impedance and high-temperature storage swelling rate of the lithium-ion battery and increase its cycling capacity retention rate, thereby improving the power performance, safety performance, and cycling performance of the lithium-ion battery.

Referring to Table 3, the comparison of Example 22 and Examples 27 to 30 shows that when the mass percentage E of element Na in the first positive electrode material and the mass percentage F of element Na in the second positive electrode material satisfy $0.5 \leq E/F \leq 0.9$, the lithium-ion battery can have low impedance and better high-temperature storage swelling rate and cycling capacity retention rate, thereby improving the power performance, safety performance, and cycling performance of the lithium-ion battery.

The foregoing descriptions are merely preferred embodiments of this application, and are not intended to limit this application. Any modification, equivalent replacement, or improvement made in the spirit and principle of this application shall fall within the protection scope of this application.

**Claims**

1.  A positive electrode material, comprising a lithium cobalt composite oxide, wherein the lithium cobalt composite oxide comprises a matrix and a coating layer located on a surface of the matrix, the coating layer comprises a first region and a second region, the first region has a $P6_3mc$ crystal structure, the second region has an R-3m crystal structure, and both the first region and the second region contain element Na.

2.  The positive electrode material according to claim 1, wherein a molar ratio of element Na to element Co in the first region is denoted as K1, a molar ratio of element Na to element Co in the second region is denoted as K2, and the positive electrode material satisfies at least one of the following conditions:

    (1)

$$0.1\% \leq K1 \leq 2.0\%;$$

    (2)

$$0.01\% \le K2 \le 1.0\%;$$

or
(3)

$$1.1 \le K1/K2 \le 5.$$

3. The positive electrode material according to claim 2, wherein the positive electrode material satisfies at least one of the following conditions:

(1)

$$0.2\% \le K1 \le 1.0\%;$$

or
(2)

$$0.04\% \le K2 \le 0.5\%.$$

4. The positive electrode material according to claim 1, wherein the positive electrode material satisfies at least one of the following conditions:

(1) both the first region and the second region are located on the surface of the matrix;
(2) the first region is dispersed in the second region in an island-like form;
(3) a thickness of the coating layer is 10 nm to 200 nm;
(4) a thickness of the first region is 10 nm to 200 nm; or
(5) a thickness of the second region is 10 nm to 200 nm.

5. The positive electrode material according to claim 1, wherein a grain boundary exists between the first region and the second region, and an included angle between a transition metal layer of the first region and a transition metal layer of the second region at the grain boundary is greater than or equal to 150°.

6. The positive electrode material according to claim 1, wherein the positive electrode material satisfies at least one of the following conditions:

(1) the matrix further contains element Na, and a molar ratio of element Na to element Co in the matrix is denoted as K3, satisfying: $0.01\% \le K3 \le 0.2\%$;
(2) the second region further contains element Al, and a molar ratio of element Al to element Co in the second region is denoted as B, satisfying: $0.1\% \le B \le 1\%$;
(3) the matrix further contains element Q, wherein the element Q comprises at least one of Al, Mg, Ti, Ca, La, Y, Zr, Fe, Mn, Ni, Nb, Mo, W, Ta, Zn, Cr, Sn, V, Ce, Sr, Ge, Ga, Pb, Ba, or Cu, and a molar ratio of element Q to element Co in the matrix is denoted as C, satisfying: $0.1\% \le C \le 10\%$; or
(4) based on a molar amount of metal elements excluding element Li in the lithium cobalt composite oxide, a molar percentage of element Co in the lithium cobalt composite oxide is 90% to 99%.

7. The positive electrode material according to claim 1, wherein the coating layer further comprises a third region, wherein the third region comprises an oxide of element M, the element M comprises at least one of Al, Mg, Ti, Zr, Y, Nb, Ca, Ni, Mn, or Ce, and at least one of the following conditions are satisfied:

(1) the third region is located on a surface of the second region facing away from the matrix;
(2) the third region is located on a surface of the first region facing away from the matrix; or
(3) the third region is located on a surface of the matrix.

8. The positive electrode material according to claim 1, wherein the lithium cobalt composite oxide comprises a first lithium cobalt composite oxide and a second lithium cobalt composite oxide, wherein an average particle size by

volume $D_v50$ of the first lithium cobalt composite oxide is greater than an average particle size by volume $D_v50'$ of the second lithium cobalt composite oxide; based on a mass of the first lithium cobalt composite oxide, a mass percentage of element Na in the first lithium cobalt composite oxide is denoted as E; and based on a mass of the second lithium cobalt composite oxide, a mass percentage of element Na in the second lithium cobalt composite oxide is denoted as F, satisfying: $0.3 \le E/F \le 1.5$.

9.  The positive electrode material according to claim 8, wherein the positive electrode material satisfies at least one of the following conditions:

(1) the average particle size by volume $D_v50$ of the first lithium cobalt composite oxide is 12 $\mu$m to 25 $\mu$m;
(2) the average particle size by volume $D_v50'$ of the second lithium cobalt composite oxide is 2 $\mu$m to 8 $\mu$m;
(3) the average particle size by volume $D_v50$ of the first lithium cobalt composite oxide and the average particle size by volume $D_v50'$ of the second lithium cobalt composite oxide satisfy: $3 \le D_v50/D_v50' \le 6$;
(4) a mass ratio of the first lithium cobalt composite oxide to the second lithium cobalt composite oxide is 70:30 to 95:5;
(5)

$$0.01\% \le E \le 0.3\%;$$

(6)

$$0.04\% \le F \le 0.5\%;$$

or
(7)

$$0.5 \le E/F \le 0.9.$$

10. An electrochemical device, comprising a positive electrode, wherein the positive electrode comprises a positive electrode material layer, and the positive electrode material layer comprises the positive electrode material according to any one of claims 1 to 9.

11. An electronic device, comprising the electrochemical device according to claim 10.

FIG. 1

# INTERNATIONAL SEARCH REPORT

| International application No. |
|---|
| **PCT/CN2023/093014** |

## A. CLASSIFICATION OF SUBJECT MATTER

H01M4/36(2006.01)i; H01M4/485(2010.01)i; H01M4/525(2010.01)i; H01M10/0525(2010.01)i

According to International Patent Classification (IPC) or to both national classification and IPC

## B. FIELDS SEARCHED

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; CNKI; WPABS; DWPI; USTXT; WOTXT; EPTXT: 宁德, 正极, 阴极, 锂, 钴, 钠, 包覆, 包裹, 核, 壳, 晶体, 晶相, positive, cathode, lithium, cobalt, sodium, coat+, wrap+, core, shell, crystal+, P63mc, R-3m

## C. DOCUMENTS CONSIDERED TO BE RELEVANT

| Category* | Citation of document, with indication, where appropriate, of the relevant passages | Relevant to claim No. |
|---|---|---|
| A | CN 114373900 A (NINGDE AMPEREX TECHNOLOGY LTD.) 19 April 2022 (2022-04-19) description, paragraphs [0002]-[0100], and figure 1 | 1-11 |
| A | CN 114497525 A (NINGDE AMPEREX TECHNOLOGY LTD.) 13 May 2022 (2022-05-13) entire document | 1-11 |
| A | CN 115104204 A (NINGDE AMPEREX TECHNOLOGY LTD.) 23 September 2022 (2022-09-23) entire document | 1-11 |
| A | JP 2010129509 A (SANYO ELECTRIC CO., LTD.) 10 June 2010 (2010-06-10) entire document | 1-11 |
| A | WO 2014083834 A1 (SANYO ELECTRIC CO., LTD.) 05 June 2014 (2014-06-05) entire document | 1-11 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **27 November 2023** | **05 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/093014** |

| Patent document cited in search report | | | Publication date (day/month/year) | Patent family member(s) | | | Publication date (day/month/year) |
| --- | --- | --- | --- | --- | --- | --- | --- |
| CN | 114373900 | A | 19 April 2022 | CN | 114373900 | B | 16 May 2023 |
| CN | 114497525 | A | 13 May 2022 | None | | | |
| CN | 115104204 | A | 23 September 2022 | WO | 2023077373 | A1 | 11 May 2023 |
| JP | 2010129509 | A | 10 June 2010 | JP | 5405091 | B2 | 05 February 2014 |
| WO | 2014083834 | A1 | 05 June 2014 | JP | 2016027530 | A | 18 February 2016 |

Form PCT/ISA/210 (patent family annex) (July 2022)